# EUROPÄISCHE PATENTSCHRIFT

(11) **EP 1 968 142 B1**
(45) Veröffentlichungstag und Bekanntmachung des Hinweises auf die Patenterteilung: **28.03.2012**
(21) Anmeldenummer: 08002434.2
(22) Anmeldetag: 11.02.2008
(51) Int. Cl.: H01M 8/04

(54) **Überbrückung eines Netzausfalls bei einer Brennstoffzellenanlage**
Bypass a power failure at a fuel cell assembly
Contourner und panne d'alimentation d'une pile à combustible

(30) Priorität: 03.03.2007 DE 102007010392
(43) Veröffentlichungstag der Anmeldung: 10.09.2008
(73) Patentinhaber: Sieb & Meyer Aktiengesellschaft, 21339 Lüneburg (DE)
(72) Erfinder: Leifert, Torsten Dr., 21360 Vögelsen (DE); Bystry, Katrin, 21401 Thomasburg (DE)
(74) Vertreter: Kloiber, Thomas

(56) Entgegenhaltungen:
- EP-A- 1 848 057
- WO-A-2006/040657
- DE-A1- 19 731 250

## Beschreibung

Die Erfindung betrifft eine Brennstoffzellenanlage zur Erzeugung und Netzeinspeisung elektrischer Energie, mit mindestens einer Brennstoffzelle, Steuerungsmitteln zur Steuerung der Brennstoffzelle insbesondere beim Anfahren, im Normalbetrieb und beim Abschalten derselben, mit Umrichtermitteln zur Anpassung der erzeugten elektrischen Energie an ein elektrisches Netz und Netzankopplungsmitteln zur Einspeisung der elektrischen Energie in das Netz sowie Netzüberwachungsmitteln, die mit den Steuerungsmitteln in Verbindung stehen, um bei Netzausfall auf den Betriebszustand der Brennstoffzelle einzuwirken.

Bei der Erzeugung und Netzeinspeisung elektrischer Energien mittels Photovoltaik genügt es im Wesentlichen die von den Photozellen gelieferte Gleichspannung durch einen Wechselrichter und einen Transformator an die Wechselspannung des Netzes anzupassen. Im Gegensatz dazu treten bei der Erzeugung und Netzeinspeisung elektrischer Energie durch Brennstoffzellen eine Reihe zusätzlicher spezifischer Probleme auf. Die Brennstoffzelle muss für die Stromerzeugung zunächst einmal angefahren werden, wobei sie auf Betriebstemperatur aufgeheizt werden muss. Für ihren Betrieb sind Nebenaggregate, wie zum Beispiel Pumpen, Lüfter und ein Steuergerät erforderlich. Diese müssen bereits vor der Produktion elektrischer Energie durch die Brennstoffzelle selbst mit elektrischer Energie versorgt werden, Wünschenswert ist auch ein kontrolliertes Herunterfahren der Brennstoffzelle zum Zwecke ihrer Abschaltung, denn ein schnelles Abschalten führt zu sehr starken Temperaturänderungen, die sich negativ auf die Lebensdauer der Brennstoffzelle auswirken. Insbesondere die Hochtemperaturbrennstoffzelle SOFC (solid oxide fuel cell) weist mit ihren ca. 900 °C Betriebstemperatur einen großen Temperaturunterschied zur Umgebungstemperatur von etwa 20 °C auf. Wiederholtes plötzliches Abschalten würde wegen der sich beim schnellen Abkühlen ergebenden mechanischen Spannungen unweigerlich zu Beschädigungen der Brennstoffzelle führen.

Wenn die zur Steuerung der Brennstoffzelle beim Anfahren, im Normalbetrieb und beim Abschalten dienenden Aggregate und das Steuergerät in nahe liegender Weise an das Stromnetz angeschlossen sind, in welches auch die von der Brennstoffzelle erzeugte elektrische Energie eingespeist wird, so kann bei einem Netzausfall kein kontrolliertes Herunterfahren und Abschalten der Brennstoffzelle erfolgen. Auch ein Leerlaufbetrieb der Brennstoffzelle ist nachteilig für ihre Lebensdauer und außerdem unwirtschaftlich, da bei Netzausfall keine Einspeisung von elektrischer Energie in das Netz möglich ist.

Aus der WO 2006/040657 A2 ist eine Energieversorgungsanlage mit Brennstoffzelle für ein elektrisch angetriebenes Kraftfahrzeug bekannt. Die Energieversorgung besteht aus einer Brennstoffzelle mit Heizung, einer Batterie und einem DC/DC-Konverter. Die elektrische Beheizung der Brennstoffzelle ist kurzzeitig abschaltbar, wenn der Fahrer durch das Gaspedal eine größere Leistung für den Antriebsmotor abfordert. Des Weiteren ist eine Batterie vorgesehen, die die nötige elektrische Energie zum Hochfahren der Brennstoffzelle und zusätzliche elektrische Leistung beim Anfahren und Beschleunigen des Fahrzeugs liefert. Während des normalen Fahrbetriebs wird die Batterie durch die Brennstoffzelle aufgeladen.

Aus der DE 197 31 250 A1 ist ebenfalls eine Energieversorgungsanlage für ein elektrisch betriebenes Kraftfahrzeug bekannt, die im Wesentlichen dieselben Eigenschaften aufweist, wie die im letzten Absatz beschriebe. Darüber hinaus ist eine Restladungsüberwachungseinrichtung offenbart, die die Restladung der Speicherbatterie zum Zeitpunkt eines Stoppvorgangs des Energieversorgungssystems umfasst. Ist die Restladung geringer als ein vorgegebener Mindestwert, laden die Brennstoffzellen die Speicherbatterie kontinuierlich auf, bis der genannte Mindestwert erreicht ist. Erst dann wird das Energieversorgungssystem abgeschaltet. Auf diese Weise wird gewährleistet, dass die für den nächsten Start des Energiesystems erforderliche elektrische Energie aus der Speicherbatterie entnehmbar ist.

Aufgabe der Erfindung ist es, eine Brennstoffzellenanlage der eingangsgenannten Art hinsichtlich der Lebensdauer der Brennstoffzelle zu verbessern.

Die Erfindung löst diese Aufgabe dadurch, dass mindestens ein Ersatzverbraucher oder Energiespeicher vorgesehen ist, der bei Netzausfall mittels eines Schalters oder eines Leistungsreglers zuschaltbar ist, um die von der Brennstoffzelle erzeugte elektrische Energie zu verbrauchen. Der erfindungsgemäße Ersatzverbraucher tritt an die Stelle der Netzeinspeisung. Die Brennstoffzelle kann daher zumindest bei kurzen Netzausfällen weiter im Normalbetrieb bleiben und muss nicht heruntergefahren oder sogar schlagartig abgeschaltet werden. Die Brennstoffzelle bleibt dabei stets auf Betriebstemperatur und kühlt nicht ab. Mechanische Spannungen und Beschädigungen der Brennstoffzelle auf Grund von Temperaturschwankungen werden somit vermieden und die Lebensdauer erhöht. Im Gegensatz zum Leerlaufbetrieb wird die erzeugte elektrische Energie im Ersatzverbraucher sinnvoll verwendet, wodurch sich die Wirtschaftlichkeit der erfindungsgemäßen Brennstoffzellenanlage verbessert.

In einer bevorzugten Ausführungsform ist der Ersatzverbraucher als elektrischer Widerstand ausgestaltet wobei die vom Widerstand erzeugte Wärme zum Heizen verwendbar ist, insbesondere zum Heizen eines Heizkessels. Diese Maßnahme ist besonders kostengünstig zu verwirklichen und empfiehlt sich besonders in dem Fall, dass die Brennstoffzellenanlage zur Hausenergieversorgung vorgesehen ist, denn im Haus hat man auch stets Verwendung für das so erzeugte warme Wasser.

Eine Weiterbildung dieser Ausführungsform sieht vor, dass der elektrische Widerstand mittels des Leistungsreglers gepulst zuschaltbar ist. Auf diese Weise kann die Höhe der vom elektrischen Widerstand verbrauchten Leistung geregelt und an die Erfordernisse der Brennstoffzelle angepasst werden.

In einer anderen Ausführungsform ist der Endverbraucher als Energiespeicher ausgestaltet. Hierfür bieten sich insbesondere elektrische Energiespeicher wie Akkumulatoren oder Kondensatoren (Supercapacitor) an, weil die elektrische Energie hier direkt speicherbar ist. Es wäre aber auch möglich die elektrische Energie in andere Energieformen umzuwandeln und zu speichern.

In einer Weiterbildung der Erfindung ist ein Spannungszwischenkreis mit einer gegenüber der Ausgangsspannung der Brennstoffzelle erhöhten Spannung vorgesehen, wobei der mindestens eine Ersatzverbraucher an den Spannungszwischenkreis zuschaltbar ist. Diese Maßnahme ermöglicht den Einsatz von Ersatzverbrauchern, die eine höhere Spannung benötigen, als die sehr geringe Ausgangspannung der Brennstoffzelle. Die von der Brennstoffzelle erzeugte Energie wird somit gemäß dem Grundprinzip der vorliegenden Erfindung bei Netzausfall dem Ersatzverbraucher zugeführt, wobei lediglich ein Spannungswandler zwischen Brennstoffzelle und Ersatzverbraucher vorgesehen sein muss.

Die Erfindung wird noch verbessert, durch die Maßnahme, dass ein Zwischenspeicher zur Versorgung der für den Betrieb der Brennstoffzelle erforderlichen Versorgungskomponenten der Brennstoffzelle mit elektrischer Energie vorgesehen ist. Die Versorgungskomponenten umfassen insbesondere die bereits erwähnten Pumpen, Lüfter und ein Steuergerät zur Steuerung des Anfahrens, des Normalbetriebs und des Herunterfahrens der Brennstoffzelle. Mit Hilfe des Zwischenspeichers ist es möglich, auch bei Netzausfall die Brennstoffzelle langsam und kontrolliert herunterzufahren, wodurch die Lebensdauer verlängert wird.

Der genannte Zwischenspeicher kann entweder über das Netz aufgeladen werden oder er ist in einer besonders wirtschaftlichen Ausführungsform gemäß Anspruch 4 als Ersatzverbraucher ausgestaltet. In diesem Fall kann er die in der Brennstoffzelle erzeugte elektrische Energie zunächst speichern um diese dann beim Herunterladen und Abschalten der Brennstoffzelle an die Versorgungskomponenten abzugeben.

Ein erfindungsgemäßes Verfahren zum Betrieb einer Brennstoffzellenanlage der oben beschriebenen Art sieht vor, dass bei Netzausfall oder bei Wegfall der zugeschalteten Verbraucher ein Ersatzverbraucher zugeschaltet und die Brennstoffzelle zumindest kurzfristig im Normalbetrieb weiter betrieben wird. Diese Maßnahme erfordert die Überbrückung der Stromabnahme bei kurz andauernden Netzausfällen, wobei ein unwirtschaftlicher Leerlauf der Brennstoffzelle vermieden wird.

In Weiterbildung des Verfahrens ist vorgesehen, dass nach Ablauf eines vorgegebenen Zeitintervalls seit dem Zuschalten des Ersatzverbrauchers die Brennstoffzelle mit der dem Endverbraucher zugeführten elektrischen Leistung gemäß einem vorgegebenen Strom- oder Leistungsgradienten heruntergefahren wird. Hierdurch kann bei längeranhaltenden Netzausfällen die Brennstoffzelle schonend und lebensdauererhaltend heruntergefahren und abgeschaltet werden.

Eine besonders wirtschaftliche Art des Herunterfahrens, insbesondere im Zusammenhang mit dem oben genannten Heizwiderstand, sieht vor, dass die Höhe des Energieverbrauchs des Ersatzverbrauchers mittels eines Leistungsreglers durch gepulstes Zuschalten des Ersatzverbrauchers geregelt wird.

Die Lebensdauer der Brennstoffzelle kann noch verbessert werden, durch die Maßnahme, dass ein Nachlauf von Versorgungskomponenten der Brennstoffzelle nach dem Herunterfahren vorgesehen ist.

Vorzugsweise wird die Brennstoffzelle nach dem Herunterfahren in den Leerlaufzustand abgeschaltet, um Energie zu sparen.

Um den wirtschaftlichen Betrieb der Brennstoffzellenanlage und insbesondere die Netzeinspeisung der erzeugten elektrischen Energie wiederherzustellen, ist vorgesehen, dass die Brennstoffzelle bei Beendigung des Netzausfalls wieder hochgefahren und der Ersatzverbraucher abgeschaltet wird.

Ein Ausführungsbeispiel der Erfindung wird nachfolgend anhand der Zeichnung näher erläutert.

Die einzige Figur zeigt im Einzelnen:

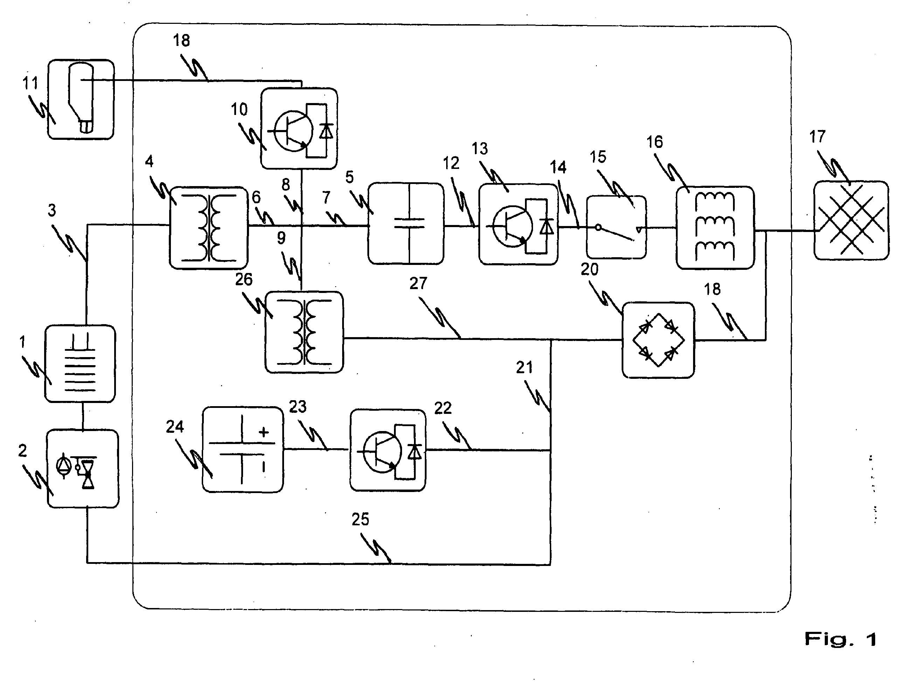

- Figur 1:: Eine schematische Darstellung einer erfindungsgemäßen Brennstoffzellenanlage als Prinzipschaltskizze.

Die in der Figur gezeigte Brennstoffzellenanlage umfasst eine Brennstoffzelle 1, die mit ihren Versorgungskomponenten 2 in Verbindung steht. Die Versorgungskomponenten umfassen insbesondere Pumpen zum Transport von Gasen und Flüssigkeiten in die Brennstoffzelle und aus dieser heraus sowie eine elektrische Heizung und mindestens einen Lüfter zum Erhitzen der Brennstoffzelle beim Hochfahren auf Betriebstemperatur oder zur Kühlung nach Erreichen der Betriebstemperatur. Außerdem verfügt die Brennstoffzelle 1 über Sensoren zur Erfassung ihrer Betriebszustände, insbesondere Temperatursensoren.

Am Ausgang der Brennstoffzelle 1 liegt eine geringe Spannung von einigen 10 Volt an. Daher wird die erzeugte elektrische Energie über eine Leitung 3 einen Umformerblock 4 zugeleitet, der die geringe Ausgangspannung der Brennstoffzelle 1 auf ein höheres Spannungsniveau eines Zwischenkreises 5 anhebt. Der Zwischenkreis ist mit einem Kondensatorsymbol dargestellt. Er ist über die Leitungen 6 und 7 mit dem Umformerblock 4 elektrisch verbunden und steht über die Leitung 8 mit einem Leistungsregler 10 in Verbindung, der seinerseits mit einem Heizwiderstand 11 elektrisch verbunden werden kann.

Beim Normalbetrieb der Brennstoffzelle 1 ist diese durch den Umformerblock 4 vom Zwischenkreis 5 galvanisch getrennt. Die erzeugte elektrische Energie niederer Spannung wird durch den Umformerblock 4 auf die höhere Spannung des Zwischenkreises 5 gebracht. Vom Zwischenkreis 5 gelangt der Strom über die Leitung 12 in einen Wechselrichter 13, in welchem der Gleichstrom aus der Leitung 12 in Wechselstrom umgewandelt wird. Der Wechselstrom gelangt über die Leitung 14 zur Netzankopplung 16, wo er in 3-phasigen Wechselstrom umgewandelt und in ein Niederspannungsnetz 17 eingespeist wird. Zwischen dem Wechselrichter 13 und der Netzankopplung 16 ist noch eine Netzüberwachung mit allpoliger Trennung15 angeordnet.

Das Niederspannungsnetz 17 kann auch elektrische Verbraucher eines Hauses umfassen, die in der Figur 1 nicht gesondert eingezeichnet wurden.

Sollte die Netzüberwachung 15 feststellen, dass ein Netzausfall vorliegt, so könnte die erzeugte elektrische Energie nicht mehr in das Netz 17 eingespeist werden. In diesem Fall tritt ein in der Figur nicht dargestelltes Steuerungsmittel in Aktion. Das Steuerungsmittel steht sowohl mit der Brennstoffzelle 1 als auch mit ihren Versorgungskomponenten 2 sowie der Netzüberwachung 15 und dem Leistungsregler 10 in Verbindung. Nach Feststellung eines Netzausfalls wird sofort der Leistungsregler 10 betätigt, so dass die auf dem Spannungsniveau des Zwischenkreises 5 befindliche elektrische Energie über die Leitung 8 zum Leistungsregler 10 und von diesem über eine Leitung 18 zum Heizwiderstand 11 gelangt, welcher in einem Heizkessel angeordnet ist. Dort wird die elektrische Energie in Wärme umgewandelt und das im Heizkessel 11 befindliche Brauchwasser erwärmt, so dass die ansonsten in das Netz 17 einzuspeisende Energie durch die Erwärmung des Brauchwassers im Heizkessel noch einem nützlichen Zweck zugeführt wird. Die Umschaltung am Leistungsregler 10 erfolgt so schnell, dass sich keine Auswirkung auf die Funktion der Brennstoffzelle 1 ergibt. Diese liefert weiterhin elektrische Energie auf niedrigem Spannungsniveau über die Leitung 3 an den Umformerblock 4.

Soll bei einem längeren Ausfall des Netzes 17 die Brennstoffzelle 1 heruntergefahren werden, so wirken die Steuerungsmittel einerseits auf die Brennstoffzelle 1 und andererseits auf die Versorgungskomponenten 2 ein um ein Herunterfahren der Brennstoffzelle 1 zu bewirken. Dies geschieht vorzugsweise in erster Linie durch Drosselung der in die Brennstoffzelle zugeführten Gase, insbesondere Wasserstoff oder Erdgas oder Biogas und Umgebungsluft, und andererseits durch Verminderung der im Heizwiderstand 11 verbrauchten elektrischen Energie indem die Steuerungsmittel den Leistungsregler 10 in schneller Folge gepulst zuschaltet. Wenn die Brennstoffzelle 1 heruntergefahren ist, wird sie durch die Steuerungsmittel abgeschaltet.

Sollte die Netzüberwachung 15 feststellen, dass der Netzausfall beendet ist, veranlassen die Steuerungsmittel das erneute Anfahren der Brennstoffzelle 1. Hierfür muss die Brennstoffzelle 1 zunächst auf Betriebstemperatur gebracht werden. Dies geschieht mittels einer nicht näher gezeigten Heizvorrichtung, die Bestandteil der Versorgungskomponenten 2 ist. Beim Hochfahren der Brennstoffzelle 1 ist eine Wärmeleistung von einigen 100 Watt für mehrere Stunden zur Unterstützung des Aufheizbrenners erforderlich. Hierfür wird über eine Leitung 19 elektrische Energie aus dem Netz 17 entnommen und in einem Hilfsspannungsversorgungsgerätes 20 in einen Gleichstrom geeigneter Spannung umgeformt. Der Gleichstrom gelangt über die Leitungen 21 und 22 vom Hilfsspannungsversorgungsgerät 20 zu einem Laderegler 23 und von diesem zu einem Zwischenspeicher 24. Der Zwischenspeicher 24 umfasst entweder einen Akkumulator oder Kondensatoren großer Kapazität (super capacitor). Der Laderegler 23 regelt den Stromfluss von dem Hilfsspannungsversorgungsgerät 20 zum Zwischenspeicher 24. Hierfür steht der Laderegler 23 mit den nicht gezeigten Steuerungsmitteln in Verbindung und wird von diesen gesteuert.

Zum Anfahren der Brennstoffzelle 1 müssen die Versorgungskomponenten 2 mit elektrischer Energie versorgt werden. Dies geschieht ebenfalls durch das Hilfsspannungsversorgungsgerät 20.

Dieses liefert über die Leitungen 21 und 25 elektrische Energie zu den Versorgungskomponenten 2. Wird die Brennstoffzelle 1 heruntergefahren, so entnehmen die Versorgungskomponenten 2 elektrische Energie aus dem Zwischenspeicher 24 und zusätzlich über den Bypassumformerblock 26 von der Brennstoffzelle. Hierfür wird der Laderegler 23 von den Steuerungsmitteln entsprechend angesteuert, so dass elektrische Energie über die Leitungen 22 und 25 aus dem Zwischenspeicher 24 zu den Versorgungskomponenten 2 gelangt.

Der Zwischenspeicher 24 kann aber auch als Ersatzverbraucher verwendet werden, sofern er beim Vorliegen eines Netzausfalles nicht vollständig aufgeladen ist. Als Endverbraucher kommen z. B. Batterien mit 24V und ausreichenden Amperestunden in Frage. Für diesen Zweck ist ein Bypass-Umformerblock 26 vorgesehen, der einerseits über eine Leitung 9 und die Leitung 6 mit dem Umformerblock 4 in Verbindung steht und andererseits über eine Leitung 27 und die Leitungen 21 und 22 sowie über den Laderegler 23 mit dem Zwischenspeicher 24 elektrisch in Verbindung steht. Durch den Bypass-Umformerblock 26 wird die an der Leitung 6 am Ausgang des Umformerblocks 4 anliegende Zwischenkreisspannung an das Spannungsniveau der Hilfsversorgung 20 oder eine für die Aufladung des Zwischenspeichers 24 geeignete Spannung angepasst. Kommt es zu einem Ausfall des Netzes 17, so wird der Bypass-Umformerblock 26 und der Laderegler 23 durch die nicht gezeigten Steuerungsmittel derart angesteuert, dass die von der Brennstoffzelle 1 erzeugte elektrische Energie über den Umformerblock 4, die Leitungen 6, 9 zum Bypass-Umformerblock 26 und von diesem über die Leitungen 27, 21 und 22 zum Laderegler 23 und von diesem in den Zwischenspeicher 24 gelangt. Dort wird die elektrische Energie zwischengespeichert, bis der Zwischenspeicher 24 voll aufgeladen ist. Sollte bei aufgeladenem Zwischenspeicher 24 noch immer ein Netzausfall vorliegen und die Brennstoffzelle 1 noch nicht heruntergefahren sein, so sorgen die Steuerungsmittel durch Ansteuerung des Leistungsreglers 10 dafür, dass die weiterhin von der Brennstoffzelle 1 erzeugte elektrische Energie im Heizwiderstand 11 verbraucht wird.

Die nicht gezeigten Steuerungsmittel sind vorzugsweise als programmierbarer Mikrocomputer ausgestaltet.

### BEZUGSZEICHENLISTE

- 1: Brennstoffzelle
- 2: Versorgungskomponenten
- 3: Leitung
- 4: Umformerblock
- 5: Zwischenkreis
- 6: Leitung
- 7: Leitung
- 8: Leitung
- 9: Leitung
- 10: Leistungsregler
- 11: Heizwiderstand
- 12: Leitung
- 13: Wechselrichter
- 14: Leitung
- 15: Netzüberwachung
- 16: Netzankopplung
- 17: Niederspannungsnetz
- 18: Leitung
- 19: Leitung
- 20: Hilfsspannungsversorgungsgerät
- 21: Leitung
- 22: Leitung
- 23: Laderegler
- 24: Zwischenspeicher
- 25: Leitung
- 26: Bypass-Umformerblock
- 27: Leitung

## Patentansprüche

1. Brennstoffzellenanlage zur Erzeugung und Netzeinspeisung elektrischer Energie, mit mindestens einer Brennstoffzelle (1), Steuerungsmitteln zur Steuerung der Brennstoffzelle (1) insbesondere beim Anfahren im Normalbetrieb und beim Abschalten derselben, mit Umrichtermitteln (4, 13, 16) zur Anpassung der erzeugten elektrischen Energie an ein elektrisches Netz (17) und Netzankopplungsmitteln (16) zur Einspeisung der elektrischen Energie in das Netz (17) sowie Netzüberwachungsmitteln (15), die mit dem Steuerungsmitteln in Verbindung stehen, um bei Netzausfall auf den Betriebszustand der Brennstoffzelle (1) einzuwirken, **dadurch gekennzeichnet, dass** mindestens ein Ersatzverbraucher (11, 24) vorgesehen ist, der bei Netzausfall mittels eines Schalters oder Leistungsreglers (10, 23, 26) zuschaltbar ist, um die in der Brennstoffzelle (1) erzeugte elektrische Energie zu verbrauchen.

2. Brennstoffzellenanlage nach Anspruch 1, **dadurch gekennzeichnet, dass** der Ersatzverbraucher als elektrischer Widerstand (11) ausgestaltet ist und die vom Widerstand (11) erzeugte Wärme zum Heizen verwendbar ist, insbesondere zum Heizen eines Heizkessels.

3. Brennstoffzellenanlage nach Anspruch 2, **dadurch gekennzeichnet, dass** der elektrische Widerstand (11) mittels des Leistungsreglers (10) gepulst zuschaltbar ist.

4. Brennstoffzellenanlage nach einem der vorhergehenden Ansprüche, **dadurch gekennzeichnet, dass** der Ersatzverbraucher als Energiespeicher (24) ausgestaltet ist.

5. Brennstoffzellenanlage nach einem der vorhergehenden Ansprüche, **dadurch gekennzeichnet, dass** ein Spannungszwischenkreis (5) mit einer gegenüber der Ausgangsspannung der Brennstoffzelle (1) erhöhten Spannung vorgesehen ist und dass der mindestens eine Ersatzverbraucher (11, 24) an den Spannungszwischenkreis zuschaltbar ist.

6. Brennstoffzellenanlage nach einem der vorhergehenden Ansprüche, **dadurch gekennzeichnet, dass** ein Zwischenspeicher (24) zur Versorgung der für den Betrieb der Brennstoffzelle (1) erforderlichen Versorgungskomponenten (2) der Brennstoffzelle (1) mit elektrischer Energie vorgesehen ist.

7. Brennstoffzellenanlage nach Anspruch 6, **dadurch gekennzeichnet, dass** der Zwischenspeicher (24) als Ersatzverbraucher dient.

8. Verfahren zum Betrieb einer Brennstoffzellenanlage nach einem der vorhergehenden Ansprüche, **dadurch gekennzeichnet, dass** bei Netzausfall oder bei Wegfall der zugeschalteten Verbraucher ein Ersatzverbraucher (11, 24) zugeschaltet und die Brennstoffzelle (1) zumindest kurzzeitig im Normalbetrieb weiter betrieben wird.

9. Verfahren nach Anspruch 8, **dadurch gekennzeichnet, dass** nach Ablauf eines vorgegebenen Zeitintervalls seit dem Zuschalten des Ersatzverbrauchers (11, 24) die Brennstoffzelle (1) zusammen mit der dem Ersatzverbraucher (11, 24) zugeführten elektrischen Leistung gemäß einem vorgegebenen Strom- oder Leistungsgradienten heruntergefahren wird.

10. Verfahren nach Anspruch 9, **dadurch gekennzeichnet, dass** die Höhe des Energieverbrauchs des Ersatzverbrauchers (11) mittels eines Leistungsreglers (10) durch gepulstes Zuschalten des Ersatzverbrauchers (11) geregelt wird.

11. Verfahren nach Anspruch 9 oder 10, **dadurch gekennzeichnet, dass** ein Nachlauf von Versorgungskomponenten (2) der Brennstoffzelle (1) nach dem Herunterfahren vorgesehen ist.

12. Verfahren nach Anspruch 9, 10 oder 11, **dadurch gekennzeichnet, dass** die Brennstoffzelle (1) nach dem Herunterfahren in den Leerlaufzustand abgeschaltet wird.

13. Verfahren nach einem der Ansprüche 9 bis 12, **dadurch gekennzeichnet, dass** die Brennstoffzelle (1) bei Beendigung des Netzausfalls wieder hochgefahren und der Ersatzverbraucher (11, 24) abgeschaltet wird.

## Claims

1. Fuel cell system for generating electrical energy and supplying it to a grid, comprising at least one fuel cell (1), control means for controlling said fuel cell (1) in particular during start-up in normal operation and shut-down, comprising converter means (4, 13, 16) for adapting the electrical energy generated so that it is suitable for an electrical grid (17), grid coupling means (16) for supplying the grid (17) with the electrical energy, and grid monitoring means (15), which are connected to the control means in order to influence the operational state of the fuel cell (1) in the event of a power failure, **characterised in that** at least one replacement consumption device (11, 24) is provided which can be connected by means of a switch or a power control device (10, 23. 26) in the event of a power failure in order to consume the electrical energy generated by the fuel cell (1).

2. Fuel cell system according to claim 1, **characterised in that** the replacement consumption device is configured as an electrical resistor (11), and the heat generated by the resistor (11) can be used for heating, in particular for heating a boiler.

3. Fuel cell system according to claim 2, **characterised in that** the electrical resistor (11) can be connected in a pulsed manner by means of the power control device (10).

4. Fuel cell system according to any one of the preceding claims, **characterised in that** the replacement consumption device is configured as an energy storage device (24).

5. Fuel cell system according to any one of the preceding claims, **characterised in that** an intermediate voltage circuit (5) is provided having an increased voltage in comparison to the output voltage of the fuel cell (1), and **in that** the at least one replacement consumption device (11, 24) can be connected to the intermediate voltage circuit.

6. Fuel cell system according to any one of the preceding claims, **characterised in that** an intermediate storage device (24) is provided for supplying the supply components (2) of the fuel cell (1) which are required for operating the fuel cell (1) with electrical energy.

7. Fuel cell system according to claim 6, **characterised in that** the intermediate storage device (24) is used as a replacement consumption device.

8. Method for operating a fuel cell system according to any one of the preceding claims, **characterised in that** in the event of a power failure or a failure of the connected consumption device, a replacement consumption device (11, 24) connects and the fuel cell (1) continues, at least temporarily, to operate in a normal operational state.

9. Method according to claim 8, **characterised in that** after a predetermined time interval from the connection of the replacement consumption device (11, 24), the fuel cell (1) together with the electrical power fed to the replacement consumption device (11, 24) is shut down according to a predetermined current or power gradient.

10. Method according to claim 9, **characterised in that** the level of energy consumption by the replacement consumption device (11) is regulated by means of a power control device (10) by pulsed connection of the replacement consumption device (11).

11. Method according to either claim 9 or claim 10, **characterised in that** the supply components (2) of the fuel cell (1) are provided with a run-on period after shut-down.

12. Method according to claim 9, 10 or 11, **characterised in that** after shut-down, the fuel cell (1) is powered down into an idling state.

13. Method according to any one of claims 9 to 12, **characterised in that** when the power failure ends, the fuel cell (1) is restarted and the replacement consumption device (11, 24) is powered down.

## Revendications

1. Système de pile à combustible pour produire de l'énergie électrique et l'injecter dans un réseau, avec au moins une pile à combustible (1), des moyens de commande de la pile à combustible (1), en particulier lors de sa mise en marche en service normal et de son arrêt, avec des moyens mutateurs (4, 13, 16) pour adapter l'énergie électrique produite à un réseau électrique (17) et des moyens, de couplage au réseau (16) pour injecter l'énergie électrique dans le réseau (17), ainsi que des moyens de surveillance du réseau (15) reliés aux moyens de commande de façon à agir sur l'état de fonctionnement de la pile à combustible (1) en cas de panne du réseau, **caractérisé en ce qu'**il est prévu au moins une charge de substitution (11, 24) qui peut être mise en circuit au moyen d'un interrupteur ou d'un régulateur de puissance (10, 23, 26) en cas de panne du réseau afin de consommer l'énergie électrique produite dans la pile à combustible (1).

2. Système de pile à combustible selon la revendication 1, **caractérisé en ce que** la charge de substitution est réalisée sous la forme d'une résistance électrique (11), et **en ce que** la chaleur générée par la résistance (11) peut être utilisée pour le chauffage, notamment pour chauffer une chaudière de chauffage.

3. Système de pile à combustible selon la revendication 2, **caractérisé en ce que** la résistance électrique (11) peut être mise en circuit de manière pulsée au moyen du régulateur de puissance (10).

4. Système de pile à combustible selon l'une des revendications précédentes, **caractérisé en ce que** la charge de substitution est réalisée la forme d'un accumulateur d'énergie (24).

5. Système de pile ai combustible selon l'une des revendications précédentes, **caractérisé en ce qu'**il est prévu un circuit de tension intermédiaire (5) présentant une tension palus élevée que la tension de sortie de la pile à combustible (1) et **en ce que** la ou les chargeas de substitution (11, 24) peuvent être insérées dans le circuit de tension intermédiaire.

6. Système de pile à combustible selon l'une des revendications précédentes, **caractérisé en ce qu'**il est prévu un accumulateur intermédiaire (24) pour alimenter en énergie électrique les composants d'alimentation (2) de la pile à combustible (1) nécessaires au fonctionnement de la pile à combustible (1).

7. Système de pile à combustible selon la revendication 6, **caractérisé en ce que** l'accumulateur intermédiaire (24) sert de charge de substitution.

8. procédé d'exploitation d'un système de pile combustible selon l'une des revendications précédentes, **caractérisé en ce que**, en cas de panne du réseau ou de disparition de la charge en circuit, une charge de substitution (11, 24) est mise en circuit et la pile à combustible (1) continue à fonctionner en régime normal au moins pendant une courte durée.

9. Procédé selon la revendication 8, **caractérise en ce que**, après écoulement d'un temps prédétermine après la mise en circuit de la charge de substitution (11, 24), la pile à combustible (1) est progressivement arrêtée, en même temps que la puissance électrique fournie à la charge de substitution (11, 24), suivant un gradient d'intensité ou de puissance prédéterminé.

10. Procède selon la revendication 9, **caractérise en ce que** la grandeur de la consommation d'énergie de la charge de substitution (11) peut être réglé; au moyen d'un régulateur de puissance (10) par une mise en circuit pulsée de la charge de substitution (11).

11. Procédé selon la revendication 9 ou la revendication 10, **caractérisé en ce qu'**il est prévu que les composants d'alimentation (2) de la pile à combustible (1) continuent à fonctionner après l'arrêt.

12. Procédé selon la revendication 9. la revendication 10 ou la revendication 11. **caractérisé en ce que** la pile à combustible (1) est déconnectée dans l'étal de marche à vide après son arrêt.

13. Procédé selon l'une des revendications 9 à 12, **caractérisé en ce que** la pile à combustible (1) est remise en marche à la fin de la panne du réseau, et **en ce que** la charge de substitution (11, 24) est mise hors circuit.
